# EUROPEAN PATENT SPECIFICATION

(11) **EP 4 037 962 B1**
(45) Date of publication and mention of the grant of the patent: **28.08.2024**
(21) Application number: 19947456.0
(22) Date of filing: 02.10.2019
(51) Int. Cl.: F16F 15/02, B62K 25/04, B62J 50/21, F16F 9/32

(54) **SYSTEM FOR BALANCING DAMPENING FORCES ON A SUSPENSION SYSTEM**
SYSTEM ZUM AUSGLEICH VON DÄMPFUNGSKRÄFTEN AUF EINEM AUFHÄNGUNGSSYSTEM
SYSTÈME D'ÉQUILIBRAGE DES FORCES D'AMORTISSEMENT SUR UN SYSTÈME DE SUSPENSION

(43) Date of publication of application: 10.08.2022
(73) Proprietor: Motion Instruments Inc., Redwood City CA 94061 (US)
(72) Inventor: PRZYKUCKI, JR., Robert James, Redwood City, California 94061 (US); CHARTIER, Michael, Plymouth, Minnesota 55447 (US)
(74) Representative: Straus, Alexander
(86) International application number: PCT/US2019/054229
(87) International publication number: WO 2021/066819

(56) References cited:
- EP-A1- 3 075 581
- EP-B1- 2 357 098
- KR-A- 20090 117 921
- US-A1- 2003 160 369
- US-A1- 2015 175 236
- US-A1- 2018 297 435
- US-A1- 2019 184 782
- US-B2- 10 099 743
- US-B2- 9 278 598

## Description

### BACKGROUND OF THE INVENTION

The present invention relates generally to the field of telemetry data for multi-wheel suspension. The present invention relates specifically to a system to balance a suspension system based on actual suspension performance data. Multi-wheel suspension systems have at least two different adjustable dampers and may have up to 200,000 different combinations of settings for each damper. It is desired to use actual data to fine-tune those settings in order to enhance the overall performance of the bike suspension system.

### SUMMARY OF THE INVENTION

One embodiment of the invention relates to a system for adjusting a damping force on the suspension of a bicycle. The system includes a linear position sensor coupled to a front shock of a bicycle to generate a vertical fork deflection signal representative of the vertical deflection of the front shock. The system includes another sensor coupled to a rear shock of a bicycle to precisely measure the position of the rear shock. A processor is coupled to the sensors. The processor generates front shock and rear shock velocity data representative of a vertical component of velocity of the front shock and rear shock based upon the signals. The processor generates front shock and rear shock acceleration data representative of the vertical acceleration of the front shock and rear shock based upon the signals. The processor generates zenith position data for the front shock and rear shock representative of a vertical zenith position based on the front shock and rear shock acceleration data, and generates an approximation curve video signal based upon the velocity data and zenith position data for the front shock and rear shock. A display is coupled to the processor and configured to generate a visual representation of the velocity to zenith position based upon the approximation curve video signal computed for the front shock and the rear shock. The visual representation includes a curve fit analysis of the velocity data versus zenith position data for the front shock and the rear shock. Adjustments to the damping force of the front shock and rear shock are based upon the curve fit analysis.

Another embodiment of the invention relates to a system for adjusting a damping force on a suspension of a bicycle. The system includes a front shock sensor coupled to a front shock of a bicycle to generate a vertical fork acceleration signal representative of the vertical acceleration of the front shock. A rear shock sensor is coupled to a rear shock of a bicycle to generate a vertical rear acceleration signal representative of the vertical acceleration of the rear shock. A processor is coupled to the sensors. The processor generates front shock and rear shock velocity data representative of a vertical component of velocity of the front shock and rear shock based upon the signals. The processor can generate zenith position data for the front shock and rear shock based on the acceleration signal representative of the vertical acceleration of the front shock and rear shock, and generates an approximation curve video signal based upon the velocity and zenith position data. A display is coupled to the processor and configured to simultaneously generate a visual representation of the velocity to zenith position based upon the approximation curve video signals computed for the front shock and rear shock. The visual representation includes a curve fit analysis of the vertical component of velocity versus zenith position of the front shock and the rear shock. The display recommends adjustments to the damping force at the front shock and rear shock based upon the curve fit analysis.

Another embodiment of the invention relates to a device for displaying parameters of a suspension system for a bicycle. Electronic memory stores user inputs and result data for a front shock and a rear shock. A setup module obtains information related to the front shock and the rear shock on a suspension system of the bicycle. The setup module includes a front shock module and a rear shock module. The front shock module obtains a calibrated vertical displacement of the front shock and stores a head tube angle of the front shock. The rear shock module obtains a calibrated vertical displacement of the rear shock and stores a rear shock angle of the rear shock. A record module records events during a ride. The record module obtains the vertical displacement, velocity, and acceleration of the front shock and rear shock for each event and stores the vertical displacement, velocity, and acceleration of the front shock and the rear shock in electronic memory. A results module accesses the results of the record module and setup module to calculate the vertical force and vertical work components for each event at the front shock and rear shock. The results module generates a curve fit analysis of the vertical zenith position component versus velocity for the front shock and rear shock. The results module compares the curve fit analysis for the zenith position and velocity components at the front shock with the curve fit analysis for the zenith position and velocity components at the rear shock. Adjustments for the front shock and the rear shock are based on the comparison of the curve fit analysis for zenith position and velocity components of the front shock and the rear shock.

Alternative exemplary embodiments relate to other features and combinations of features as may be generally recited in the claims.

US 2015/175236 discloses a system for a suspension of a bicycle, the system comprising: a front shock sensor coupled to a front shock of the bicycle to generate a vertical front shock deflection signal representative of a vertical deflection of the front shock; a rear shock sensor coupled to a rear shock of the bicycle to generate a vertical rear shock deflection signal representative of a vertical deflection of the rear shock; a processor coupled to the sensors, to generate front shock velocity data representative of a vertical component of velocity of the front shock based upon the |vertical front and rear shock deflection signals, generate rear shock velocity data representative of a vertical component of velocity of the rear shock based upon the vertical front and rear shock deflection signals, generate zenith position data for the front shock representative of a vertical displacement based on the vertical front shock deflection signal.

### BRIEF DESCRIPTION OF THE DRAWINGS

This system will become more fully understood from the following detailed description, taken in conjunction with the accompanying figures, wherein like reference numerals refer to like elements in which:
FIG. 1 illustrates a system for measuring the deflection, velocity, and acceleration of a multi-wheeled suspension system to calibrate the suspension system, according to an exemplary embodiment.
FIG. 2 is a detailed view of the front shock or fork on the suspension system illustrated in FIG. 1, according to an exemplary embodiment.
FIG. 3 is a detailed view of a rear shock or shock on a suspension system illustrated in FIG. 1, according to an exemplary embodiment.
FIG. 4 is an image of a record module to record the events with calibrated and installed sensors, according to an exemplary embodiment.
FIG. 5 is a bike setup module, where the model and geometry of the front shock and rear shock are identified, the leverage ratio is identified to calculate the rear axle vertical position relative to the instantaneous shock position, according to an exemplary embodiment.
FIG. 6 illustrates a vector normalization of the obtained displacements to measure the vertical component of the fork, according to an exemplary embodiment.
FIG. 7 is a user interface where user notes are input into the system, and details about the performance are annotated, according to an exemplary embodiment.
FIG. 8 is a summary page of the results module providing summary data of the ride and events, according to an exemplary embodiment.
FIG. 9 is a continuation of the summary page of the results module illustrated in FIG. 8, according to an exemplary embodiment.
FIG. 10 illustrates a histogram of the derived compression speeds and rebound speeds for a ride, according to an exemplary embodiment.
FIG. 11 is a waveform of a ride with multiple events.
FIG. 12 is the waveform of FIG. 11 zoomed in to show the waveform of the events.
FIG. 13 is a regression analysis of a speed of compression and a damper rebound.
FIG. 14 is a GPS tracker for a ride, illustrating the locations of events and where the ride began and ended, according to an exemplary embodiment.

### DETAILED DESCRIPTION

Referring generally to the figures, various embodiments of a system 10 to adjust a dampening force on a suspension system of a bicycle are shown. Many of today's bicycles use shock absorption to improve the riding experience, enhance traction on slopes or slippery terrain, and/or reduce the force distributed to the rider's wrists or body. Sensors on the shock absorbers measure the deflection of the shock absorbers. With this data, system 10 can determine the zenith position, velocity of the deflection, the acceleration, and the forces distributed to the front shock (or "fork") and rear shock (or "shock"). The speed of compression or rebound, as well as the absolute force/work of the deflection and rebound, are important balance metrics that determine how the suspension system is performing. Sensors may capture and collect raw deflection and/or acceleration data and communicate the data through telemetry to a smartphone or other device.

Obtaining shock absorption raw deflection data for a post-ride analysis is the first step to understand how a suspension system behaves. However, raw deflection data represents a multitude of events for a single ride. The deflection data represents a collection of instantaneous position samples for each deflection event in the time domain. Instantaneous position samples may be made along with a nine-axis accelerometer, gyro, and direction sensor based on the earth's magnetic field. The instantaneous position of a fork damper and shock absorber damper are sampled at a specified frequency. A method of turning this raw data into analytical results for improving the riding experience is sought that enables setting the parameters of the shock absorber according to the results of objective deflection data. By visualizing the results, a rider will "see" how the suspension system performs during actual events measured during a ride and how to adjust the suspension system to enhance performance.

Each damper on a bicycle should deflect a similar amount for each event. In addition, the speed of the deflection is also relevant. If the front and rear shocks both deflect equal distances but at different times, the rider experiences an imbalance. The ultimate goal in tuning damped suspension systems is to ensure that each damper behaves similarly. For motorcycles, bicycles, or other multi-wheeled vehicles, the balance between the front shock absorber and the rear shock absorber requires understanding the system as a whole, not just individual dampers. This requires comparing the shock absorber performance.

Typical dampers are adjustable to enable a rider to configure damper response to a force (*e.g.*, an event). Some of the adjustments include compression, rebound, spring rate, spring progressivity, and other settings that an operator "tunes" on each damper. For example, compression and rebound adjustments typically include two different damper tuners for high and low-speed events. In all, a single damper can have 200,000 or more unique combinations. To understand the system as a whole, both the front and rear damper must be analyzed together. When paired with another damper, the combinations of settings can become unwieldy. Applicant has found that by taking the data of a ride and visualizing the results, an operator can tune the settings to achieve greater suspension balance.

A control process is sought so that an operator can tune the dampers as a system and achieve an enhanced riding experience based on the results. To better understand the dynamic forces of an event with multiple dampers, a system is sought to systematically inform the user on preferred settings based on actual riding events. Based on this control system, the operator should quickly "see" whether the system is balanced and make adjustments accordingly. Visualization of the data further ensures that each damper responds as part of a complete system according to unique bicycle characteristics and/or rider preferences. Applicant has found that by separating the data from the sensors into compression data and rebound data, and optionally further classifying the data by event type, the regression lines of the processed data provide a system to visualize suspension balance and make adjustments.

A data or curve fit such as a regression analysis can simplify a comprehensive scatter-plot of all events for analysis of particular data samples indicative of the vehicle's dynamic response. For example, a displacement versus velocity plot of each event creates a large scatter-plot of the front and rear shock performance. A regression analysis line enhances understanding through visual simplification of the results. Using a filter to organize scatter-plot data into collections of discrete events (*e*.*g*., left-hand turns, jumps, or vertical climbs, or rocky descents). This enables the system to analyze performance for each classification and ensure appropriate shock absorption settings for each event type.

The processor separates the data obtained from the time domain into compression events and rebound events. The processor can then perform a regression analysis for either the complete scatter-plot or a limited scatter-plot limited for a collection of discrete events. To visualize the damper balance, the processor classifies the events as a compression or rebound in the time domain. The real-time graph records compressions as upward movements and rebounds as downward movements. This data is converted to a scatter-plot for compression events and a scatter-plot for rebound events. The scatter-plot generates a velocity of the contraction or rebound along the y-axis, versus a total displacement on the x-axis for each event. Once the system plots the regression lines for the front shock and the rear shock, the user or system can compare the lines. The bike is tuned or balanced when the regression lines representing the rebound or compression of the front and rear shocks are parallel. In practice, perfectly parallel lines are seldom achieved, but the process gives a mechanism to visualize the performance of the suspension system and make improvements to the system based on data.

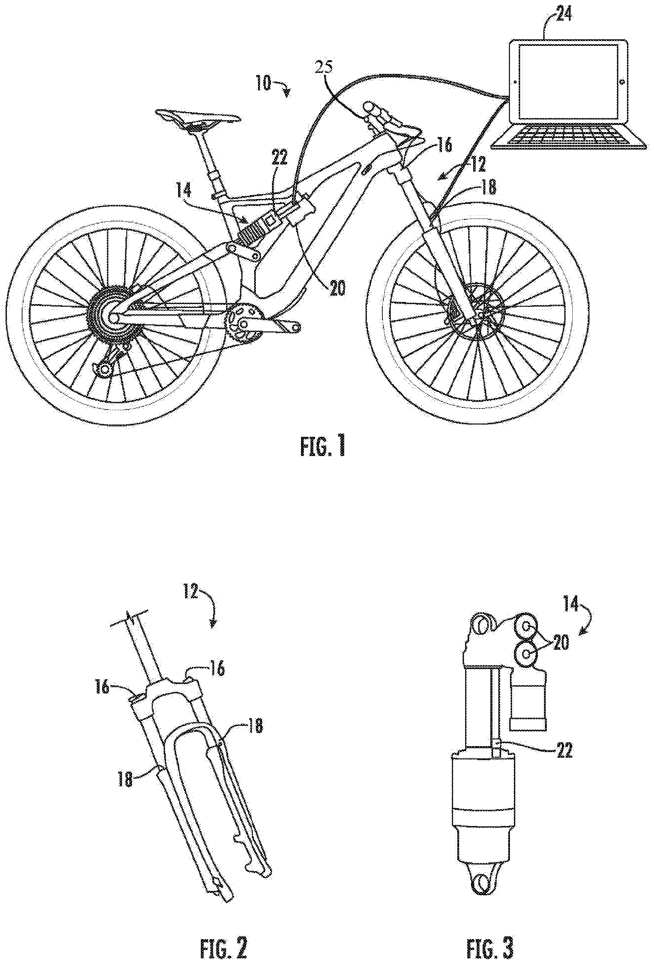

FIG. 1 illustrates a control system 10 for adjusting a dampening force on a suspension system 11. A front shock damper, or fork 12, and a rear shock damper, or shock 14, are illustrated. The fork 12 has fork adjustments 16 that increase or decrease the spring constant, damping force, and other parameters of the front suspension. A Tracer^{™} (Trademark Serial No. 87,556,462 owned by Motion Instruments Inc.) or sensor 18 measures the deflection of the fork 12 through time. A front shock sensor or fork sensor 18 can couple to a fork 12 of a bicycle suspension system 11 to generate a vertical fork 12 deflection signal. The deflection signal represents the vertical deflection or displacement of the front shock or fork 12.

Similarly, shock 14 has shock adjustments 20 that increase or decrease the spring constant, damping force, or other parameters of the rear suspension. A tracer or sensor 22 measures the deflection of the shock 14 through time. The rear shock sensor 22 couples to a rear shock 14 of the bicycle suspension system 11 in conjunction with a leverage curve to calculate rear axle position derived from shock position to generate a vertical rear deflection signal representative of the vertical deflection of the rear shock 14.

The balance of the suspension system 11 includes the combined effects of the fork 12 and shock 14. Sensors 18 and 22 measure the magnitude of the deflections of the fork 12 and shock 16 as an operator rides the bicycle. When the ride is completed, a processor 24 (e.g., a desktop computer, a laptop, a tablet such as an iPad or Android device, a smart-phone such as an iPhone or Android, or another electronic device) connects to the front and rear sensors 18 and 22 to measure the deflection of the suspension system 11. The processor 24 connection may use wires, as shown in FIG. 1, or may connect wirelessly via Bluetooth, Wi-Fi, or other wireless connections.

When the tablet or processor 24 connects to sensors 18 and 22 it processes (e.g., downloads, stores, and analyzes) the deflection data measured over the course of the ride. The processor 24 can process the data and calculate a velocity of the deflections based on the magnitudes in the time domain. The system 10 also computes an acceleration of the deflections per unit time (*e*.*g*., by taking the anti-derivatives of the measured deflections in the time domain). System 10 is calibrated with the mass of the rider to determine the sag. System 10 can obtain or compute the acceleration. Thus, the processor can also determine the force generated by each event. Using the processes described below, processor 24 can assemble the data into a visual display of suspension system 11. This visualized data can help calibration and tuning of the fork 12 and shock 14 of the suspension system 11.

Processor 24 may couple to the sensors 18 and 22. Processor 24 may obtain raw deflection displacement and/or acceleration data from the sensors 18 and 22 connected to the fork 12 or shock 14 during an event. An event may include a right or left-hand turn, a jump, a climb, a bump, a drop, or another event that utilizes the damping force of the suspension system 11. For example, sensors 18 and 22 are position sensors that can capture raw deflection displacement data for an event. Processor 24 may obtain raw acceleration data from sensors 18 and 22 connected to the fork 12 or shock 14. For example, the acceleration sensors 18 and 22 are accelerometers that capture raw acceleration data for an event. Processor 24 may use the obtained raw deflection (displacement or acceleration) data to compute vertical components of the deflection in the vertical direction. For example, the processor may use a head fork angle and rear shock geometry to convert the raw data into vertical components of deflection.

In some embodiments, a push switch, knob, or button 25 (*e*.*g*., a wireless handlebar button 25) is coupled to the handlebar and coupled to control system 11, *e*.*g*., the computer application, processor 24, and/or sensors 18 and 22. In the illustrated embodiment of FIG. 1, button 25 is located on the handlebar and connects wirelessly to the application or other component of control system 11. Other locations of button 25 may include the frame, a seat, a backpack, or a helmet of the rider/operator. For example, button 25 may be located in a variety of different locations to better customize the operation of control system 11 for the individual rider. Button 25 enhances the operators experience while using control system 11 by facilitating the operation of the application (*e*.*g*., while riding or setting sag).

For example, when setting the sag the operator presses button 25 to change a mode of the application or control system 11. When mounting or dismounting the bicycle, the operator can press button 25 to suspend operation of the application and prevent vibratory oscillations and/or incorrect calibration of the sag. In this way, button 25 provides a useful user interface to control system 11 to wait for the operator to mount or dismount the bicycle.

In operation, while the operator is riding the bicycle or in the race position (*e*.*g*., weight neutral to forward) the operator presses button 25 to calibrate the sag. This configuration enhances the user experience because the operator may be wearing cycling gloves and have difficulty operating a touch-screen, *e*.*g*., on a phone. Similarly, a tactile button 25 is easier to press while operating the bicycle than a series of steps on a device (*e.g.*, on a cellphone or tablet). Button 25 also enhance sag calibrations, since the calibration can be done by a single user instead of several operators (*e*.*g*., two or more operators traditionally calibrate sag). In this way, button 25 enhances the compliance and/or accuracy of the sag calibration(s).

In some embodiments, button 25 includes multiple functions. For example, button 25 can be used within the application to drop pins or markers while the operator is riding the bicycle. This functionality may enhance the data collected and provide more detailed information regarding a specific event and/or provide the location of an event on a GPS map. Button 25 enables the use of markers or pins while riding and enhances the analysis of the data collected at an event or between two or more pins to evaluate the metrics of a section of trail. In addition, button 25 may be used with third party connected devices. For example, button 25 can control third party devices including starting or stopping a video camera, taking photographs, providing weather or news reports, or changing an audio source (*e*.*g*., changing a radio station or playlist).

Accurate calibration of the sag enables system 10 to more accurately determine vertical components of the displacements and/or accelerations of the fork 12 and shock 14 during a ride. Based on the vertical components of the displacement or acceleration, processor 24 can generate fork 12 or shock 14 velocity data. The velocity data is representative of a vertical component of the velocity of the front shock or fork 12 and rear shock 14 based upon the raw displacement or acceleration signals received by sensors 18 and 22. For example, the rear axle deflection is derived from the shock data using the leverage ratio of the bike. System 10 compares the axle deflections of the front wheel and rear wheel in the vertical direction. A system 10 that obtains raw displacement data can generate fork 12 and rear shock 14 acceleration data by deriving the vertical component of velocity. The processor 24 can anti-derive the vertical component of raw acceleration data at the fork 12 or rear shock 14 based upon the vertical component of the acceleration signals to generate a vertical velocity. Thus, processor 24 may obtain raw displacement data or raw acceleration data and generate vertical components of displacement, velocity, and acceleration in the fork 12 and rear shock 14.

Processor 24 may use a similar process to generate force data in the vertical direction for the fork 12 and rear shock 14. For example, the force is equal to the mass times the acceleration. Control system 10 is calibrated with a mass (*e*.*g*., sag) and processor 24 may obtain or generate a vertical acceleration to compute a force for each event. In this way, the raw displacement data and/or raw acceleration data can generate a vertical force based on the fork 12 or rear shock 14 vertical acceleration data for each event.

Similarly, processor 24 can generate total work for each event. Work is a function of force and displacement and processor can generate a vertical component of force and displacement in the fork 12 and rear shock 14. Thus, vertical components of displacement, zenith position data, velocity, acceleration, force, and work are obtained from a single displacement or acceleration obtained by sensors 18 and/or 22. Moreover, the obtained components for the fork 12 and shock 14 are independent for each event, such that the fork 12 and shock 14 may have different components of displacement, zenith position data, velocity, acceleration, force, or work for the same event.

Processor 24 can generate approximation curves, such as regression lines, curves, exponential curve fits, or other best-fit continuous functions, from the obtained components at the fork 12 and shock 14. Based on the approximation curves, processor 24 generates a video signal based upon the velocity data and zenith position data for the fork 12 and rear shock 14. In some embodiments, the approximation curve is based on the zenith position data of the front axle at the fork 12 and the rear axle derived by the deflection rear shock 14 data. For example, processor 24 may compare the zenith position and velocity data for the fork 12 to the shock 14 and make recommendations to damper force adjustments based on the approximation curves. For example, system 10 may make recommendations based on the slopes of the regression lines for the fork 12 and shock 14.

The fork 12 and shock 14 are calibrated with a sag displacement based on the rider's weight on a stationary bicycle. An event occurs when the displacement on the fork 12 and/or shock 14 are compressed or rebounding above a threshold value from the calibrated sag displacement. In other words, an event includes all displacements beyond a threshold value of the sag. Zenith position data filters the event data to obtain a maximum displacement in the vertical direction for the wheel axle at the fork 12 or shock 14 during an event. The zenith position represents the maximum displacement of the fork 12 or shock 14 in the vertical direction and is compared to the maximum velocity in the vertical direction to create a zenith position versus velocity approximation curve.

Processor 24 can compute the velocity versus zenith position data for recorded events and generate a fork 12 and a shock 14 regression line for the front axle and rear axle (e.g., derived from the signals at the fork sensor 18 and rear shock sensor 22). The regression line may be the zenith position versus velocity and/or the work for the deflection and rebound data versus velocity. The slope of the fork 12 regression line is compared to the slope of the rear shock 14 regression line to establish the recommended adjustments of the front shock and the rear shock. The recommendations may make the slopes of the regression lines parallel or nearly parallel (*e*.*g*., within 15 degrees of parallel). In some embodiments, the slope of the regression lines are adjusted to within 5°, 10°, 15°, 20°, 25°, or 30° of parallel. In some embodiments, the curve fit of an approximation curve for the fork 12 is compared to an approximation curve for the shock 14 and adjusted to generate the same curved shape and/or minimize the distance between the curves.

A display can couple to the processor to generate a visual representation of the velocity to zenith position approximation curve video signal. The processor 24 computes the signal for the fork 12 and rear shock 14. The visual representation can include curve fit analysis of the velocity data versus zenith position data for the fork 12 and rear shock 14, in a variety of formats. For example, the visual representation may include a scatter point plot with the raw data illustrated or may include only a curve fit of the raw data. The curve fit may include any continuous function that represents a continuous approximation of the zenith position data, velocity data, and/or work data. The display can further recommend adjustments to the damping force at the fork 12 and/or rear shock 14 based upon analysis of the curve fit.

Display 26 may be an application on a smartphone or tablet. Display 26 may be a computer or printer. Display 26 may illustrate recorded waveforms of the vertical displacement or acceleration signals that generate the zenith position, velocity, force, and work data for the fork 12 and rear shock 14 in the time domain.

FIG. 2 illustrates a detailed view of a fork 12 showing the location of the fork adjustments 16 and fork sensors 18. Similarly, FIG. 3 illustrates a detailed view of a shock 14 illustrated the placement of shock adjustments 20 and shock sensors 22. The component hardware illustrated in FIGS. 1-3 will be referred to throughout the application with the assigned reference numbers previously described. A complex suspension system 11 (*e*.*g*., with 200,000 settings for each shock absorber) can have billions of adjustable combinations. Control system 10 enhances suspension system 11 performance through an adjustment process.

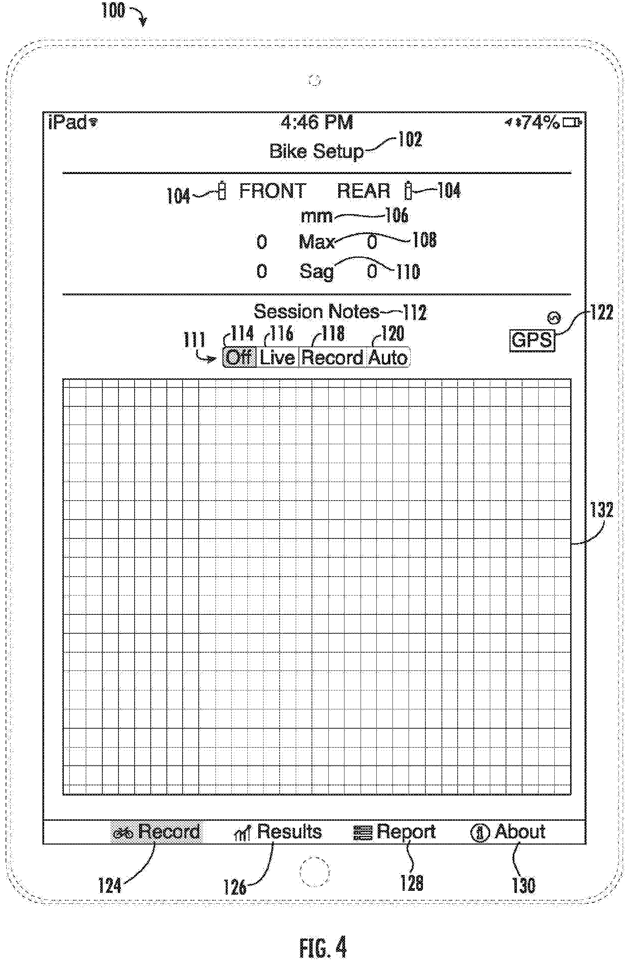

FIG. 4 illustrates a home-screen 100 of control system 10. At startup, the home-screen 100 is displayed. From the home-screen 100, the operator can access most of the features of the system 10 and can see a summary of pertinent results. The home-screen 100 allows the operator to interact with the system 10 and record riding events and data. The home-screen 100 includes hyperlinks and/or displays for a bike setup module 102, a battery indicator 104, a relative/absolute measurement toggle 106, a maximum display 108, a sag indicator 110, and a note module 112. Home-screen 100 further includes a toggle bar 111 that includes an off toggle 114, a live toggle 116, a record toggle 118, and an auto toggle 120. Home-screen 100 can also hyperlink to a GPS module 122. Four components of control system 10 include a record module 124, results module 126, report module 128, and an about/help module 130.

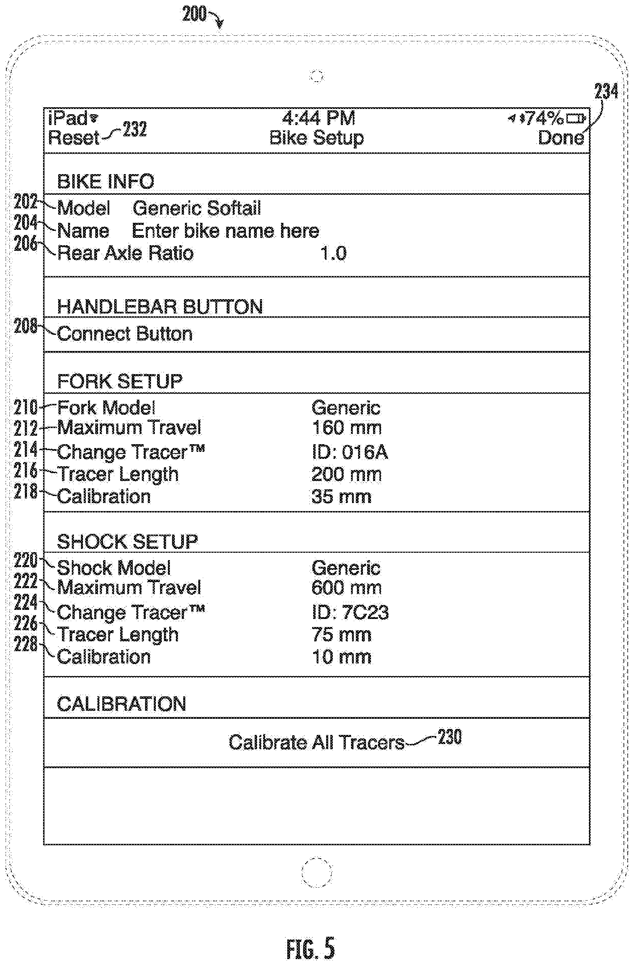

When the operator first loads the home-screen 100 and presses the bike setup hyperlink 102 on the home-screen 100, system 10 loads the bike setup module 200 illustrated in FIG. 5. Bike setup module 200 enables the operator to input information to record data from one or more sensors on the suspension system. Bike setup module 200 enables the operator to input information about the bike, the suspension system, the sensors, and other pertinent parameters to begin recording a ride. A model input 202 allows the operator to input a standard bike model into the system 10. In some embodiments, model input 202 displays a list of available models. In some embodiments, model input 202 searches an input model name or number to determine the correct bike model. Model input 202 may ask the user to confirm the selected or identified bike model.

Name 204 enables a user to name the bike and/or give a customized name to the results obtained on a bike. The name 204 may allow one bike to be stored at a time or several bikes can be stored in the system with different customized names 204.

The rear axle ratio is a measurement of the amount of travel at the rear wheel relative to the displacement at the shock 14. It is a ratio, so a rear axle ratio of one means that the distance the shock 14 travels is equal to the distance the rear wheel travels. The rear axle ratio is determined by the system 10 based on the model input 202 of the bike. In some embodiments, the rear axle ratio is determined by system 10 based on the user input shock model 220. If system 10 does not support the bike model input 202, the user can customize the rear axle ratio (e.g., by inputting the shock model 220 number). The system 10 may prevent users from editing the rear axle ratio or may allow different versions of system 10 to access or adjust this ratio.

The connect button 208 pairs system 10 with the sensors 18 and 22. The system 10 can be paired through bluetooth, WiFi, a network connection, through electric cables or wires (as illustrated in FIG. 1), or by other electronic means. The connect button 208 can determine whether sensors 18 and 22 at the front fork 12 and rear shock 14 are actively outputting data and whether system 10 can record the data.

The fork model 210 and shock model 220 allow a user to input model numbers or otherwise identify the shocks on the bike. For example, a customized bike may have different fork 12 and shock 14 models 210 and 220 than indicated based on the model input 202 number. Identifying the fork model 210 and shock model 220 defines the maximum fork travel 212 and maximum shock travel 222 respectively. In some embodiments, the operator cannot edit the maximum fork travel 212 or maximum shock travel 222 data. System 10 may select the data based on the input fork/shock model numbers 210 and 220. In other embodiments, the application allows the user to input the maximum fork travel 212 and maximum shock travel 222 without defining the fork model 210 or shock model 220.

The fork tracer ID 214 and shock tracer ID 224 identify the sensors 18 and 22 at the fork 12 and shock 14, respectively. The fork tracer length 216 and shock tracer length 226 are selected so that the sensors can detect a distance greater than or equal to the maximum fork travel 212 or maximum shock travel 222.

The fork tracer calibration 218 and shock tracer calibration 228 output the results obtained from calibration module 230. Calibration module 230 and fork/shock tracer calibration numbers are not user programmable. To calibrate the sensors, the operator lifts the bike off the ground to completely unload the suspension system 11. When the calibration module 230 is activated (*e*.*g*., the "Calibrate All Tracers" hyperlink is selected), the bottom of the shock absorber (*e*.*g*., the fork 12 and rear shock 14) is defined. This process sets the "zero" value of the sensor 18 and 22 on the suspension system (*e*.*g*., the minimum deflection). Because the sensor 18 and 22 length is longer than the maximum travel (*e*.*g*., stroke length) of the suspension, the system 10 must calibrate the minimum deflection, or bottom, of the suspension system 11. Once calibrated, all displacements are determined relative to the set zero value. Once the user enters the calibration module 230, the user cannot exit the module 230 without tapping the "Calibrate All Tracers" hyperlink. If the user tries to exit, system 10 generates a warning and the data obtained may not provide accurate results.

Once the bike is set-up, the user can either select reset 232 to remove all values and start over or press done 234 to save the data and return to the home-screen 100. The reset 232 button may enable the correction of mistakes or to adjust system 10 for use with another bike. When done 234 is selected the data in the bike setup module 200 is stored for the suspension system 11 and the user returns to the home-screen 100.

Returning to FIG. 4, the home-screen 100 includes a battery indicator 104. Battery indicator 104 appears when the tracers or sensors 18 and 22 connect to system 10. System 10 reads the battery strength of the sensors 18 and 22 and adjusts the displayed battery levels according to the reading. When the battery level appears, it means the system 10 is connected to the sensor and ready to record. If the system 10 cannot connect to the battery, a spinning wheel in the same place the battery would appear indicates the system 10 cannot connect to the sensors 18 and 22. The sensor 18 or 22 may include an accelerometer that requires an adequate power supply to operate. Thus, battery indicator 104 may indicate when batteries should be replaced for a long ride or when power to an accelerometer is absent or generates inaccurate results. System 10 may implement a power saving measure on the sensor to put the unit to sleep when sensor 18 or 22 is not connected or after a period of non-use (*e*.*g*., after 5 minutes). The battery indicator 104 visually indicates whether the sensors are transmitting data or connecting to the system 10. In the event the sensor 18 and 22 has adequate power but is in sleep mode, the operator can shake the bike and activate sensors 18 and 22. Once sensors 18 and 22 are advertising to system 10, battery indicator 104 shows the power supply available.

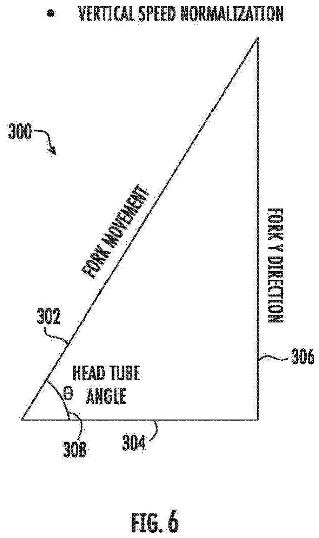

System 10 uses sensors to detect deflections in the vertical directions. The distances of these deflections are used to determine the velocity and acceleration as anti-derivatives of the position. The measured deflections are not generally in the vertical direction. For example, with reference to FIG. 6 illustrating a vertical speed normalization, the forks movement 302 (and velocity) is the sum of two component vectors (*e*.*g*., a horizontal component 304 and a vertical component 306). The component vectors can be obtained based on the head tube angle 308 of the fork 12. In this way, processor 24 can obtain a horizontal component 304 and a vertical component of the fork position, speed, and acceleration. Since the objective of the suspension system is to match the vertical displacement at the fork 12 to the vertical displacement of the shock 14 for the suspension system 11, the horizontal component 304 may be removed and the vertical component 306 of fork 12 compared to the vertical component of shock 14. The geometry of the shock 14 is similarly used to determine vertical components of the position, speed, and acceleration that can be matched or compared to the vertical components 306 of the fork 12.

Similarly, the deflection of the rear shock 14 is determined in the vertical direction. The shock position is measured and the rear axle vertical displacement is calculated using the leverage curve of the bicycle. The leverage curve is a value on a table based on the model of the shock 14. The displacement in the shock 14 is related to a displacement of the axle of the rear wheel. For example, a position of 100 mm on shock 14 corresponds to vertical position 86 mm on the rear axle. In some embodiments, the rear axle vertical displacement is calculated using the leverage curve of the bicycle. In other embodiments, the manufacturer provides a rear axle position. A pivot sensor can measure the angle of the pivot. The pivot sensor can measure the relative angle between two pivot points with an angle sensor. The pivot sensor measures the deflection based on measured deflections of two angles on a pivot.

FIG. 4 illustrates a relative/absolute measurement toggle 106 that allows a user to determine whether these vertical components 306 are conveyed to the user in absolute or relative terms. For example, system 10 may display an absolute deflection of 35 mm to indicate an event. Similarly, system 10 may display a 17.5% deflection to indicate the same event (*e*.*g*., a 35 mm deflection divided by a 200 mm max deflection). Depending on the desired result, a relative or absolute measurement may be preferred, and toggle 106 enables user selection of the displayed result.

Home-screen 100 may include a maximum displacement display 108, indicating the furthest sensor displacement (*e*.*g*., from calibrated "zero") obtained since the system 10 was turned on or for a downloaded set of data points. This number can be displayed as an absolute value (*e*.*g*., mm) or as a relative value (percent of total displacement).

Similarly, home-screen 100 can display the amount of sag 110 in absolute or relative terms. Static sag 110 measures the deflection caused by a stationary rider sitting on the bike. Sag 110 defines the preload in the damper caused by the rider's weight. Suspension manufacturers provide recommendations for the preload on the fork 12 and shock 14 absorbers based on the damper spring rate. In some embodiments, the spring rate can be adjusted by adding or removing air pressure from the damper, allowing for more or less preload and/or rider weight.

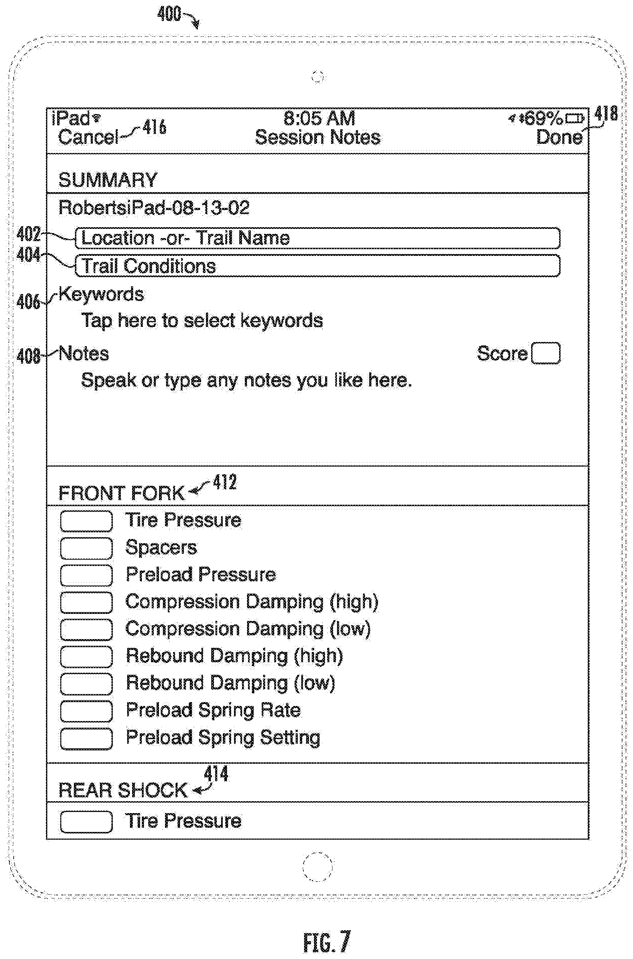

Selecting the note module 112 hyperlink on home-screen 100 loads a note module 400, illustrated in FIG. 7 that allows the user to capture the fork 12 settings and shock 14 settings on a particular ride. This may be useful if adjustments are made to the settings to be able to "revert back" or compare old and new results. Note module 400 may include a location or trail name 402 as well as a trail condition 404 input. The user may identify keywords 406 to identify a particular ride or event classification. The rider may input any general notes 408 using speech recognition and rate the ride results with a score 410. Fork parameters 412 may also be recorded for a particular ride. Fork parameters 412 may include the tire pressure, spacers, preload pressure, compression damping (high), compression damping (low), rebound damping (high), rebound damping (low), preload spring rate, preload spring setting, and other parameters. The same or similar shock parameters 414 can be annotated and recorded for the rear shock. The user can return to the home-screen 100 by pressing the cancel button 416 or the done button 418. The cancel button 416 returns to the home-screen 100 without saving the changes, whereas the done button 418 returns to the home-screen 100 after saving the annotations.

Returning to FIG. 4, a toggle bar 111 may allow selection of four different recording modes. Off toggle 114 means that the sensors are powered off, and system 10 is not recording any displacement data. The live toggle 116 displays displacements of the sensors in real-time on the real-time display 132, but may not record the results in long-term memory. The user may view the instantaneous displacements, but system 10 won't save the results for future analysis. The record toggle 118 records all displacements upon pressing the button. The real-time results are displayed on the real-time display 132 and stored for future retrieval and/or analysis. System 10 records every displacement or absence of displacement at a fixed frequency (*e*.*g*., 200 Hz) in record mode 118. Different sample frequencies may be used and can depend upon the bandwidth of system 10 to the connection of sensors 18 and 22. For example, the frequency can be 100, 120, 140, 160, 180, 200, 220, 240, 260, 280, 300, 320, 340, 360, 380, or 400 Hz, based upon the bandwidth of the connection to sensors 18 and 22. The auto toggle button 120 is similar to the record toggle 118 except that system 10 automatically discards "junk data" (*e*.*g*., data obtained in the absence of a displacement or when a sensor is not operating correctly). Auto toggle 120 only records data when the bike is moving (*e*.*g*., it stops recording when the rider stops to take a break) and trims the file size of the results by removing stationary data. When the operator is done recording in either record mode 118 or auto mode 120 system 10 presents the user with an option to store or discard the data.

As described in further detail below, the home-screen 100 may include a GPS module 122 hyperlink to record the GPS coordinates of a ride. The home-screen 100 also includes selection buttons for four primary sections of control system 10. The record module 124 receives input data for recording a ride and is accessed through the default home-screen 100, as described above. The record module 124 allows the user to define the bike, connect the sensors, and record data. For example, record module 124 records data at a fixed frequency. Record module 124 couples to display 26 to generate waveforms of the vertical component of the displacement, velocity, and acceleration in a time domain. The results module 126 lets the user navigate to different graphics and tables to visualize the data. The report module 128 generates a standardized report that compares several previously recorded rides. This page allows the user to compare bike settings and recorded metrics side-by-side and allows comparison testing between alternative fork 12 and shock 14 settings. The about/help module 130 provides system 10 firmware and firmware versions of sensors 18 and 22. The module may contain marketing information, search functionality, help pages, and/or instructions for connecting sensors 18 and 22 to a bicycle.

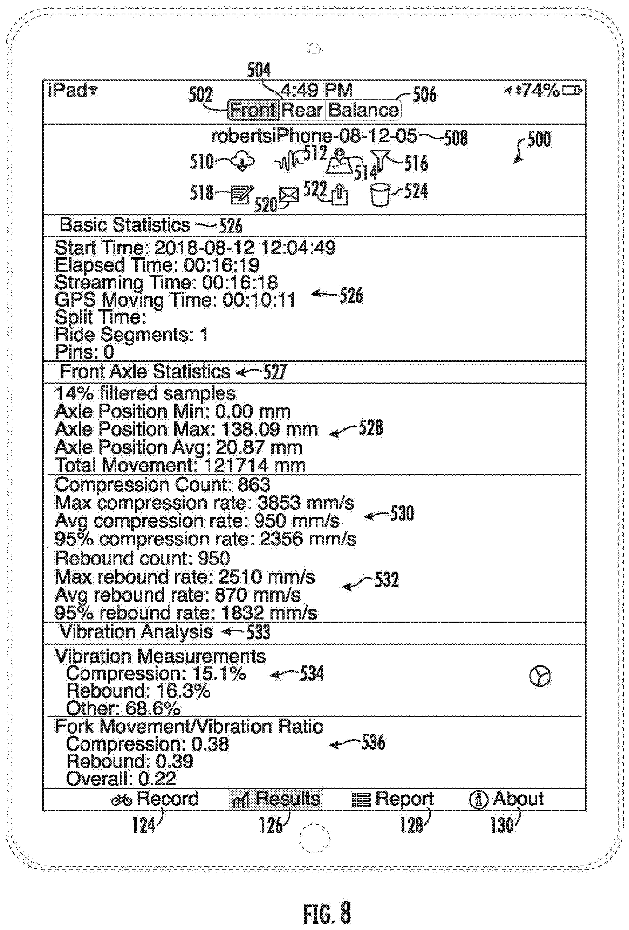

FIGS. 8-13 illustrate the results module 126 in further detail. Once data is acquired, the user can press the results module 126 on home-screen 100 to open the summary results module 500 illustrated in FIG. 8. The results module 500 has three main components: the front suspension component 502, the rear suspension component 504, and the balance component 506. The front suspension component 502 isolates the summarized results to the front suspension or fork 12. Similarly, the rear suspension component 504 displays summarized results for the rear suspension or shock 14. Front suspension component 502 data is displayed in FIG. 8 for fork 12. The same or similar data is available for the rear shock 14 in rear suspension component 504. The balance component 506 analyzes the suspension system 11 as a whole and includes data from the front fork 12 and the rear shock 14.

The current file 508 displays the loaded file for analysis (*e*.*g*., FIG. 8 displays the file "robertsiPhone-08-12-05"). Current file 508 is a hyperlink and can be altered or replaced by tapping on the hyperlink. When activated the hyperlink provides a list of previously recorded files displaying the files currently stored in system 10. Files can be stored locally or on a network. In some embodiments, the current files 508 include only files saved on a local drive. In other embodiments, the current files 508 include files on a local drive and/or a network (*e*.*g*., cloud drive). A download file button 510 allows the user to download a file stored on a network to a local drive.

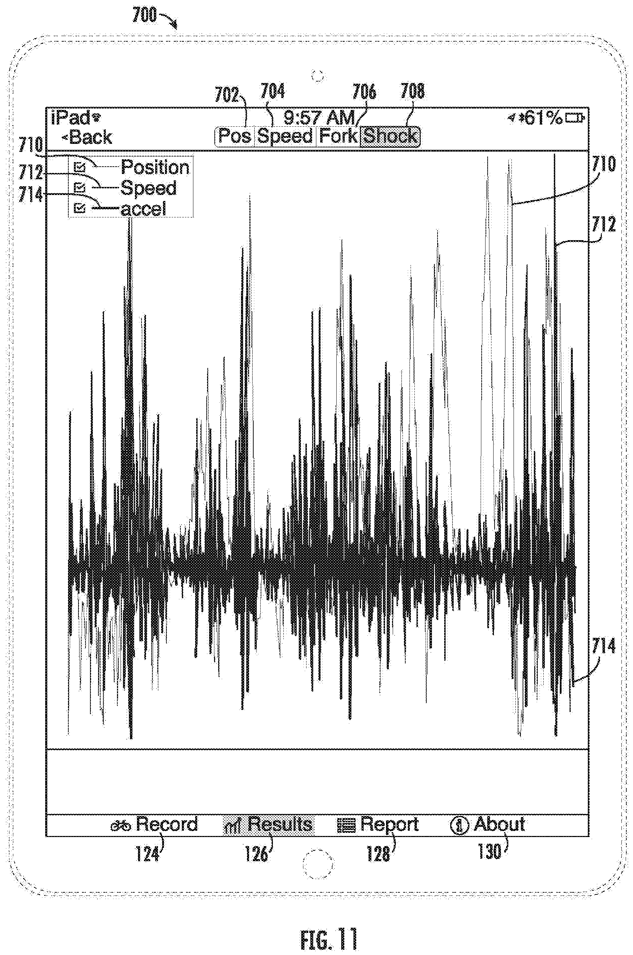

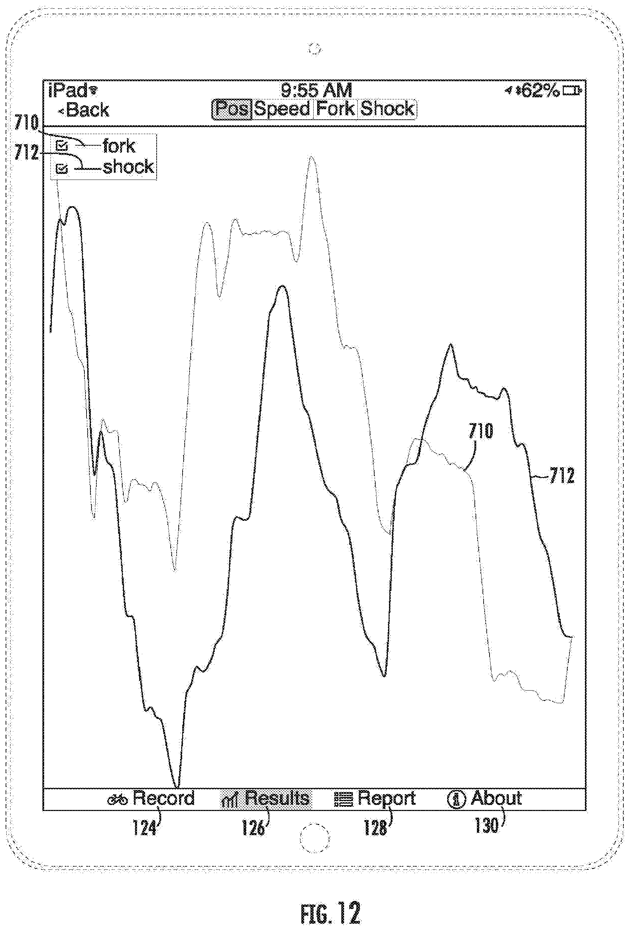

The recorded waveform module 512 allows for visual inspection of raw data. The waveform (*e*.*g*., illustrated in FIGS. 11 and 12) shows the raw sensor data displayed in the time domain. The recorded waveform module 512 allows users to drill into specific events of a ride and to see the actual waveform generated by the sensors. In some embodiments, different filters 516 display or remove specific data. For example, a user can remove a checkbox from system 10 to remove the data for a particular filter from the screen. The recorded waveforms 512 are described in greater detail below with reference to FIGS. 11 and 12.

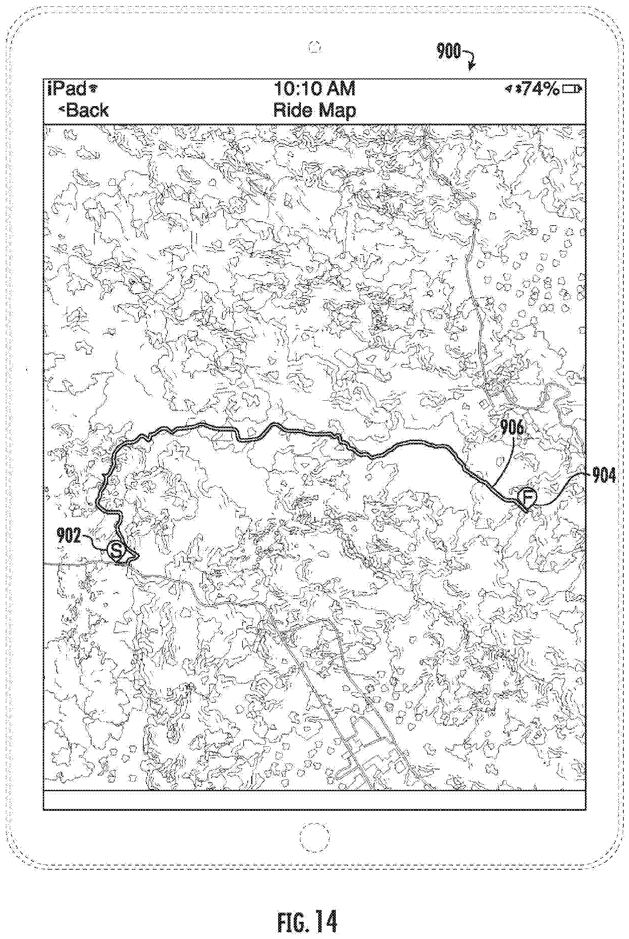

The results screen may have a similar GPS hyperlink 514 as hyperlink 122 displayed on the home-screen 100 of record module 124. GPS hyperlinks 122 and 514 may display the GPS module 900 shown in FIG. 14 described in reference to that figure below.

A filter 516 may screen out data or events that the user doesn't want analyzed. For example, using filter 516, a user can analyze the fork 12 and shock 14 data for all right turn events during a ride recorded on a file 508. Filter 516 may also filter compression and rebound strokes that don't meet a minimum or maximum amplitude or time constraint. Notes hyperlink 518 may connect the user to the note module 400 described above. A mail icon 520 may allow the user to email the data to himself or customer support for help analyzing a file 508. An upload hyperlink 522 allows the user to zip the recorded file 508 and transfer the file 508 via text messaging, AirDrop, to a network through WiFi or cell coverage, using an application such as MotionIQ^{™} (Trademark Serial No. 87,556,457 owned by Motion Instruments Inc.), or other software with the ability to receive and unpack zip files. A discard icon 524 allows the user to delete the current file 508 and any accompanying data.

Filter 516 can be used to identify the beginning and end times of a series of deflection signals along a ride. For example, processor 24 can selectively analyze filtered deflection signals for zenith position data, velocity data, acceleration data, force data, and work data analysis. Display 26 generates a visual representation of the filtered velocity data versus zenith position data and/or velocity data versus work data for those events selected in the time domain. Filter 516 can identify specific event types (e.g., right-hand turns or jumps) to select specific displacement data or acceleration data corresponding to that event type. Using the filter 516 in this way generates a velocity versus force/work visual representation for the identified event types based on the filtered data.

Filter 516 may be used between any two pins. Pins can be dropped throughout a ride. A pin is simply a GPS location at a particular time. If GPS is not present, the pin is a marker at a particular point of the recording. To filter, tap the filter 516 icon, select start and end pin. The analysis excludes unfiltered events and analyzes the filtered events that were recorded between the start pin and the end pin.

The basic statistics 526 of a ride can be recorded on the summary results page 500. The basic statistics 526 may include the start time and date of a ride, the elapsed time of the ride and the time the sensors were streaming. The GPS moving time may measure the time that the bike was moving and the ride segments may show any breaks in the data stream (e.g., for breaks where the bike is not moving). System 10 displays similar basic statistics 526 for the shock 14 in the rear shock component 504.

The front axle statistical results are unique to the front axle, but the rear axle also has similar rear axle statistical metrics. The statistics can be divided into displacement statistics 528, compression statistics 530, and rebound statistics 532. For example, the percentage of filtered sampled and analyzed, the minimum, maximum, and average axle positions, and the total axle movement may be recorded as the displacement statistics 528. The compression count, maximum and average compression rate, and statistical two sigma compression rate may be included as the compression statistics 530. Similar measurements for the rebound count, max and average rebound rate, and two sigma rebound rate may be included in the rebound rate 532.

Based on the displacement and front axle statistics, dynamic forces such as vibration statistics can be determined. Vibration measurements 534 may include relative compression, rebound, and/or other statistics. The fork movement/or vibration ratios 536 may have absolute compression, rebound, and/or other statistics. The summary results page 500 for the rear suspension component 504 may include similar statistics.

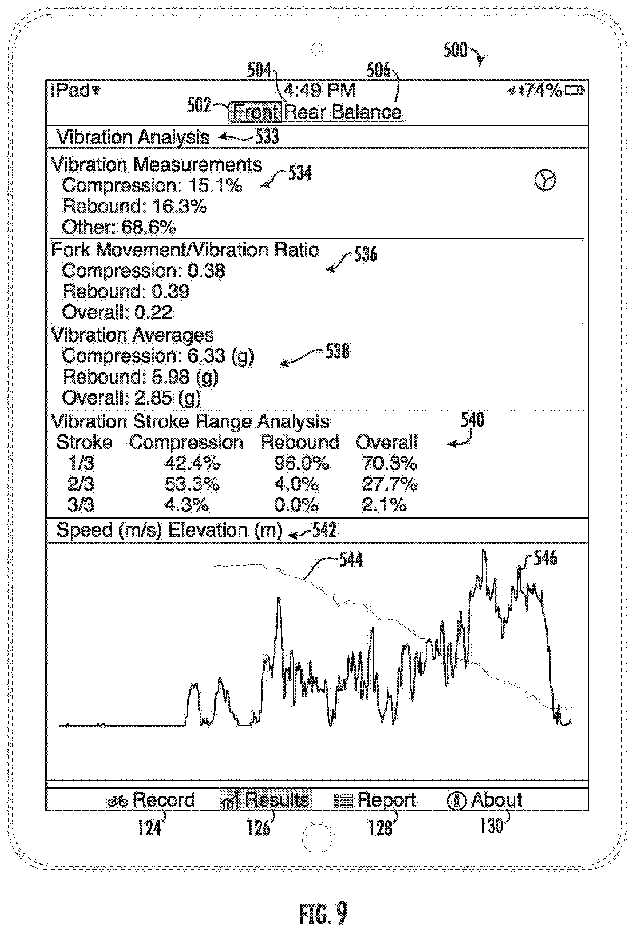

FIG. 9 is a continuation of FIG. 8 (*e.g.*, when a user scrolls down on the basic statistics 526 module of the results module 126). For example, vibration measurements 534 and vibration ratios 536 are displayed. The vibration analysis 533 includes vibration averages showing the values in multiples of gravity (*e.g.*, a 6.33g compression average) and a stroke analysis 540 of the compression and rebound events. System 10 visualizes the data as a speed (m/s) versus elevation (m) plot 542. The elevation 544 (measured in meters) decreases as the rider comes down a mountain and the speed 546 gradually increases.

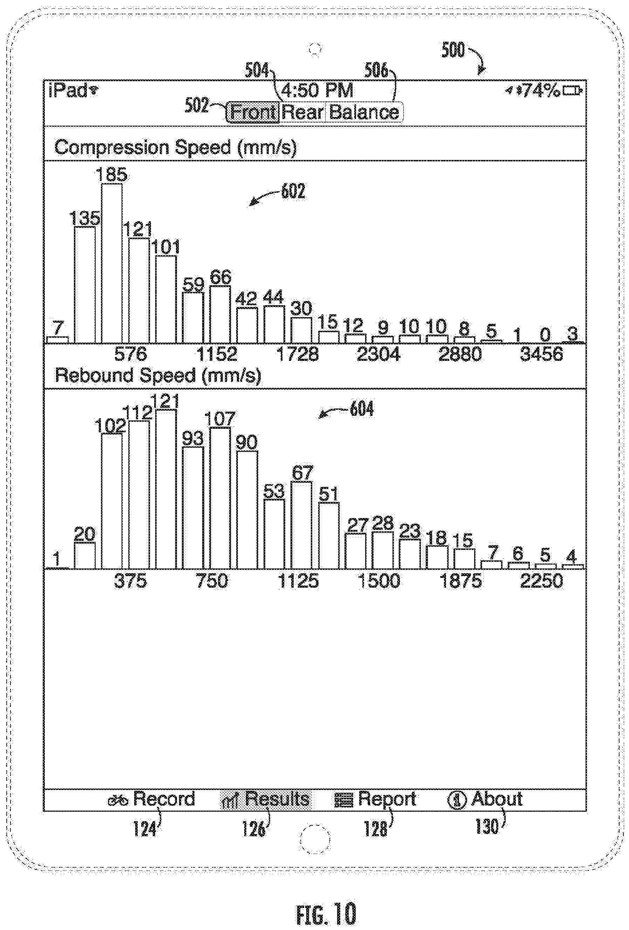

FIG. 10 displays the cumulative number of compressions and rebound speeds for a given ride as a histogram. For example, the histogram indicates a compression speed 602 at approximately 576 mm/s resulted in 185 compressions for this ride. Similarly, only 3 compressions exceeded a 3,456 mm/s compression speed. System 10 generates a similar histogram for the rebound speed 604 indicating the rebound speeds in mm/s for all the rebound events. For example, FIG. 10 illustrates 93 rebounds with an approximate speed of 750 mm/s.

FIG. 11 illustrates a recorded waveform 700 in the time domain. The recorded waveform 700 has several filters including the position/displacement filter 702, the speed filter, 704, the fork filter 706, and the shock filter 708. Several filters may be selected simultaneously for different visualizations of the raw data. For example, FIG. 9 illustrates a displacement plot 710, a speed plot 712 and an acceleration plot of the shock filter 708. Similar data can be obtained for the fork filter 706. In some embodiments, the fork filter 706 and the shock filter 708 may be plotted simultaneously.

FIG. 12 illustrates a zoomed in (*e*.*g*., a 10 second framed view) perspective of the displacement plot 710 and the speed plot 712 illustrated in FIG. 11. The waveforms in FIG. 12 show the continuity of the displacement plot 710 and speed plot 712. Only when the time domain is large does the representation create the sharp vertical lines representing extreme events shown in FIG. 11.

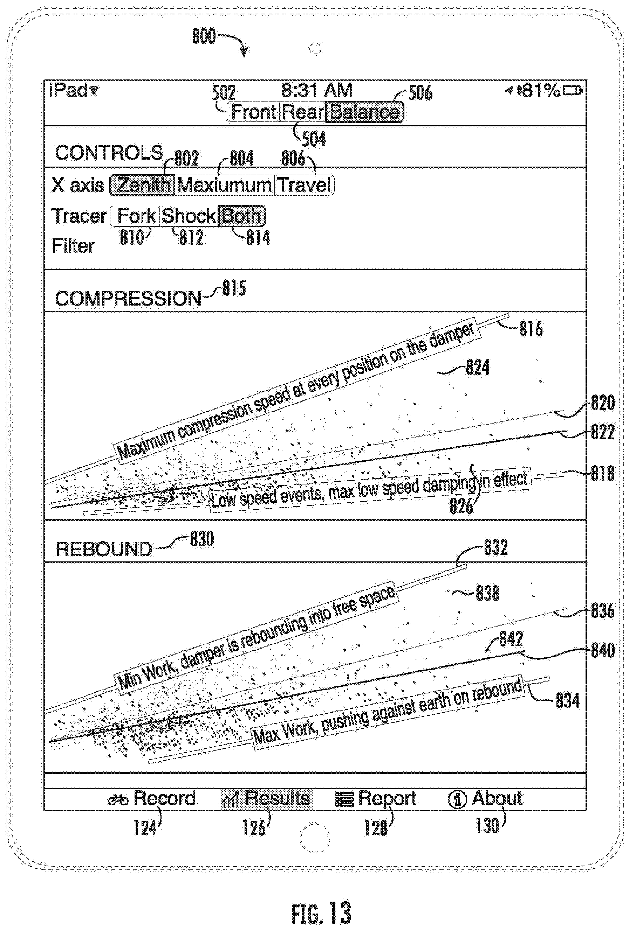

The results module 500 of FIG. 8 includes a balance component 506 introduced above. The balance component 506 relates fork 12 data to shock 14 data to determine overall suspension system 11 performance. When the user touches the balance component 506 in FIG. 8, system 10 opens a balance results module 800 shown in FIG. 13.

As illustrated in FIG. 13, the balance data includes a toggle filter to select zenith data 802 acquired at the reversal of a compression or rebound, maximum data 804 that includes only the maximum values for an event and excludes other data, and travel data 806. Travel data 806 includes all collected data. The user can filter data based on the fork filter 810, shock filter 812, or both (*e*.*g*., filter 814). As illustrated, the suspension system 11 balance 506 of zenith data 802 for both the fork 12 and shock 14 is selected. This creates scatter-plots of zenith data 802 for both the fork 12 (light dots and light line) and the shock 14 (dark dots/line). The compression scatter-plot 815 includes data points for the speed of compression versus the displacement caused in the damper. The maximum compression speed 816 is calculated as a sigma regression line (*e*.*g*., a 6 sigma extreme theoretical value indicating the maximum compression speed). Similarly, the minimum or low-speed events are calculated as a sigma regression line for the data (*e*.*g*., a 6 sigma extreme theoretical value indicating minimum compression speed). The light line or fork regression line 820 and the dark line or shock regression line 822 are created by the regression analysis of fork data 824 (indicated by a light dot) and shock data 826 (indicated by a dark dot).

The regression analysis of the fork regression line 820 and shock regression line 822 provides an way to determine the balance of suspension system 11. Applicant has found that when the fork regression line 820 and shock regression line 822 are parallel, or nearly parallel, the suspension system 11 is balanced. For example, the illustrated suspension system 11 is more balanced in the compression scatter-plot 815 than in the rebound scatter-plot 830. This gives the rider a quick way to visualize the data and adjust the settings on the suspension system 11.

The rebound scatter-plot 830 has similar features to the compression scatter-plot and is used to visualize the balance on the suspension system 11. For example, a minimum work 832 (or maximum rebound) and maximum work 834 (or minimum rebound) are determined based on the theoretical sigma values of statistical analysis. Similarly, the fork regression line 836 is based on the fork data 838. The shock regression line 840 is determined based on the shock data 842. Thus, the regression analysis shown in the compression scatter-plot 815 and rebound scatter-plot 830 provide a method of visualizing the suspension systems balance for the combined spring rates of the fork 12 and shock 14 working as a system.

As described above, the rider can select a GPS hyperlink 122, 514 on the home-screen 100 or results page 500. GPS hyperlinks 122 and 514 may display the GPS module 900 shown in FIG. 14. The GPS module 900 stores the beginning or start 902 and end or finish 904 of a ride. This enables the operator to compare the analytical results obtained from a ride with the difficulty and location of the ride. Competitors may tune a bike for a particular course, for example, by riding the course and visually comparing the data, as described. GPS module 900 may also remind the operator to note the difficulty or strenuousness of a ride and make adjustments accordingly. GPS module 900 can be linked to work with any of the modules described above and supports the data obtained from control system 10.

The processor 24 described herein can be coordinated by operating system software, such as iOS, Android, Chrome OS, Windows XP, Windows Vista, Windows 7, Windows 8, Windows Server, Windows CE, Unix, Linux, SunOS, Solaris, iOS, Blackberry OS, VxWorks, or other compatible operating systems. In other embodiments, a proprietary operating system may control the computing device. Conventional operating systems control and schedule computer processes for execution, perform memory management, provide file system, networking, I/O services, and provide a user interface functionality, such as a graphical user interface ("GUI"), among other things.

The processors 24 described herein may implement the techniques described herein using customized hard-wired logic, one or more Application Specific Integrated Circuits (ASIC) or Field Programmable Gate Arrays (FPGA), firmware and/or program logic which causes processors to be a special-purpose machine. According to one embodiment, parts of the techniques disclosed herein are performed by processor 24 of FIG. 1 in response to executing one or more sequences instructions contained in electronic memory. Such instructions may be read into or from memory from another storage medium, such as storage device. Execution of the sequences of instructions contained in memory causes the processor 24 to perform the process steps described herein. In alternative embodiments, hard-wired circuitry may be used in place of or in combination with software instructions.

Moreover, the various illustrative logical blocks and modules described in connection with the embodiments disclosed herein can be implemented or performed by a machine. Examples include a processor device, a Digital Signal Processor (DSP), an ASIC, an FPGA or another programmable logic device, discrete gate or transistor logic, discrete hardware components, or any combination thereof designed to perform the functions described herein. A processor device can be a processor 24, but in the alternative, the processor device can be a controller, microcontroller, or state machine, combinations of the same, or the like. A processor device can include electrical circuitry configured to process computer-executable instructions. In another embodiment, a processor device includes an FPGA or another programmable device that performs logic operations without processing computer-executable instructions. A processor device can also be implemented as a combination of computing devices, *e*.*g*., a combination of a DSP and a processor 24, a plurality of processors 24, one or more processors 24 in conjunction with a DSP core, or any other such configuration. Although described herein primarily concerning digital technology, a processor 24 device may also include primarily analog components. For example, some or all of the rendering techniques described herein may be implemented in analog circuitry or mixed analog and digital circuitry.

The processor 24 can store the processed images in memory and/or transmit the images to a display 26. The processor 24 can transmit the images to display 26 in real time. Display 26 includes any device configured to receive images and display or store the images. In some embodiments, display 26 is located at or near system 10. In some embodiments, display 26 is remote from system 10. In addition, display 26 can include a device (*e*.*g*., memory) that stores data and/or signals for future analysis and verification. Such a display 26 effectively documents and stores the data and/or signals.

Display 26 includes any device that receives a processed signal. For example, display 26 includes, but is not limited to, a mobile phone (*e.g.*, a smartphone), monitoring devices, electronics systems, webcams, a television, a computer monitor, a computer, a hand-held computer, a tablet computer, a laptop computer, a personal digital assistant (PDA), a digital video recorder (DVR), a multi-functional peripheral device, etc. Display 26 apparatuses can include unfinished products, lenses, and/or memory.

In system 10, electronic memory includes any non-transitory computer-readable storage medium. Memory can be located anywhere within system 10. For example, system 10 can locate memory in display 26, a separate computing device, the cloud, and/or in other locations. Processor 24 may access memory to obtain measured displacement and/or acceleration data. For example, the raw data, as well as the calculated zenith position, velocity, force, work, and approximation curves (*e*.*g*., regression lines), can be stored in memory. These program instructions can reside in RAM memory, flash memory, ROM memory, EPROM memory, EEPROM memory, registers, hard disk, a removable disk, a CD-ROM, or any other form of a non-transitory computer-readable storage medium. Such special-purpose computing devices may also combine custom hard-wired logic, ASICs, or FPGAs with custom programming to accomplish the techniques described herein. The special-purpose computing devices may include desktop computer systems, server computer systems, portable computer systems, handheld devices, networking devices or any other device or combination of devices that incorporate hard-wired and/or program logic to implement the techniques.

It should be understood that the figures illustrate the exemplary embodiments in detail, and it should be understood that the present system 10 is not limited to the details or methodology set forth in the description or illustrated in the figures. It should also be understood that the terminology is for the purpose of description only and should not be regarded as limiting.

Further modifications and alternative embodiments of various aspects of the invention will be apparent to those skilled in the art in view of this description. Accordingly, this description is to be construed as illustrative only. The construction and arrangements, shown in the various exemplary embodiments, are illustrative only. Although only a few embodiments have been described in detail in this disclosure, many modifications are possible (*e*.*g*., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes, and omissions may also be made in the design, operating conditions and arrangement of the various exemplary embodiments without departing from the scope of the present invention.

## Claims

1. A system (10) for adjusting a damping force on a suspension of a bicycle, the system (10) comprising:
a front shock sensor (18) coupled to a front shock (12) of the bicycle to generate a vertical front shock deflection signal representative of a vertical deflection of the front shock (12);
a rear shock sensor (22) coupled to a rear shock (14) of the bicycle to generate a vertical rear shock deflection signal representative of a vertical deflection of the rear shock (14);
a processor (24) coupled to the sensors (18/22), to
generate front shock velocity data representative of a vertical component of velocity of the front shock (12) based upon the vertical front and rear shock deflection signals,
generate rear shock velocity data representative of a vertical component of velocity of the rear shock (14) based upon the vertical front and rear shock deflection signals,
generate zenith position data for the front shock (12) representative of a vertical displacement based on the vertical front shock deflection signal, and generate an approximation curve video signal for the front shock (12) based upon the velocity and zenith position data, and
generate zenith position data for the rear shock (14) representative of a vertical displacement based on the vertical rear shock deflection signal, and generate an approximation curve video signal for the rear shock (14) based upon the velocity and zenith position data; and
a display coupled to the processor (24) configured to simultaneously generate a visual representation of the velocity data to the zenith position data based upon the approximation curve video signal computed for the front shock (12) and the rear shock (14), the visual representation comprising a curve fit analysis of the velocity data versus the zenith position data for the front shock (12) and the rear shock (14), wherein the display recommends adjustments to the damping force of the front shock (12) and rear shock (14) are based upon the curve fit analysis.

2. The system (10) of claim 1, wherein the processor (24) filters data points of the vertical components of the zenith position data for the front shock (12) and the rear shock (14) for events upon which the curve fit analysis is based, wherein the display outputs visual representations of the filtered data points for the front shock (12) and the rear shock (14) as a curve fit of a rebound and damping velocity versus zenith position for each event.

3. The system (10) of claim 1, wherein the display is an application on a smartphone or a tablet.

4. The system (10) of claim 1, wherein recorded waveforms of the vertical front and rear shock deflection signals generate zenith position, velocity, acceleration, force, and work data for the front shock (12) and the rear shock (14), wherein the recorded waveforms are presented in a time domain.

5. The system (10) of claim 1, wherein the processor (24) computes the velocity and zenith position data for recorded events and generates front and rear shock regression lines of the velocity data versus the zenith position data, wherein a slope of the front shock regression line is compared to a slope of the rear shock regression line to establish the recommended adjustments of the front shock (12) and the rear shock (14), the recommended adjustments setting the front and rear shock regression line slopes within 15° of parallel.

6. The system (10) of claim 1, wherein the processor (24) computes total work for deflection and rebound of the front shock (12) and the rear shock (14), the total work being a function of deflection data and force data, wherein the processor (24) generates front shock regression lines and rear shock regression lines of the total work versus the velocity data and the force data versus the velocity data and calculates the recommended adjustments of the front shock (12) and the rear shock (14) that sets a slope of the front shock regression lines and a slope of the rear shock regression lines within 15° of parallel.

7. The system (10) of claim 1, further comprising a GPS recorder that correlates the vertical front and rear shock deflection signals for the front shock (12) and the rear shock (14) into events corresponding to a tracked GPS location.

8. The system (10) of claim 1, further comprising electronic storage to store the generated data, wherein the processor (24) generates the zenith position data and the velocity data from vertical front and rear shock deflection signals collected from a plurality of rides stored in electronic storage.

9. The system (10) of claim 1, further comprising a filter to identify a beginning time and end time of a series of vertical front and rear shock deflection signals along a ride, the processor (24) analyzing the filtered deflection signals for zenith position data, velocity data, acceleration data, force data, and work data analysis, and the display generating a visual representation of the velocity data versus the zenith position data and the velocity data versus work data.

10. The system (10) of claim 1, wherein the processor (24) generates the front and rear shock velocity data and the zenith position data for two or more rides, and the display obtains results from the processor (24) to generate the visual representation for the two or more rides.

11. The system (10) of claim 1, wherein the processor (24) generates vertical velocity data versus elevation for ride events, and the display outputs a graph of the vertical component of the vertical velocity data versus elevation.

12. The system (10) of claim 1, wherein the processor (24) generates histograms for events with an equal compression velocity and an equal rebound velocity, and the display generates a visual representation of a number of events with equal compression velocities and a number of events with equal rebound velocities.

13. The system (10) of claim 1, wherein the display is output in real-time, the processor (24) generating the velocity and zenith position data during an event and the display generates a visual representation of the velocity data to the zenith position data based upon the approximation video signal computed for the front shock (12) and the rear shock (14) in real-time during the event.

14. The system (10) of claim 1, further comprising a record module that records data at a fixed frequency and couples to the display to generate waveforms of the vertical component of displacement, velocity, and acceleration of the front shock (12) and the rear shock (14) in a time domain.

15. The system (10) of claim 1, further comprising a filter that filters events according to user-defined inputs, the velocity and zenith position data for the front shock (12) and the rear shock (14) only including the events filtered according to the user-defined inputs, wherein the display generates a visual representation of the velocity data to the zenith position data based on the filtered events.

## Patentansprüche

1. System (10) zum Einstellen der Dämpfungskraft an einer Aufhängung eines Fahrrads, wobei das System (10) umfasst:
einen vorderen Stoßdämpfer-Sensor (18), der mit einem vorderen Stoßdämpfer (12) des Fahrrads gekoppelt ist, um ein vertikales vorderes Stoßdämpfer-Auslenkungssignal zu erzeugen, das für eine vertikale Auslenkung des vorderen Stoßdämpfers (12) repräsentativ ist;
einen hinteren Stoßdämpfer-Sensor (22), der mit einem hinteren Stoßdämpfer (14) des Fahrrads verbunden ist, um ein vertikales hinteres Stoßdämpfer-Auslenkungssignal zu erzeugen, das eine vertikale Auslenkung des hinteren Stoßdämpfers (14) darstellt;
einen Prozessor (24), der mit den Sensoren (18/22) verbunden ist, um
Geschwindigkeitsdaten des vorderen Stoßdämpfers zu erzeugen, die eine vertikale Komponente der Geschwindigkeitskomponente des vorderen Stoßdämpfers (12) auf der Grundlage der vertikalen vorderen und hinteren Stoßdämpfer-Auslenkungssignale darstellt,
hintere Stoßdämpfergeschwindigkeitsdaten zu erzeugen, die eine vertikale Komponente der Geschwindigkeitskomponente des hinteren Stoßdämpfers (14) auf der Grundlage der vertikalen vorderen und hinteren Stoßdämpfer-Auslenkungssignale darstellt,
Zenitpositionsdaten für den vorderen Stoßdämpfer (12) zu erzeugen, die eine vertikale Verschiebung auf der Grundlage des vertikalen vorderen Stoßdämpfer-Auslenkungssignals darstellen, und ein Annäherungskurven-Videosignal für den vorderen Stoßdämpfer (12) auf der Grundlage der Geschwindigkeits- und Zenitpositionsdaten zu erzeugen, und
Zenitpositionsdaten für den hinteren Stoßdämpfer (14) zu erzeugen, die eine vertikale Verschiebung auf der Grundlage des vertikalen hinteren Stoßdämpfer-Auslenkungssignals darstellen, und ein Annäherungskurvenvideosignal für den hinteren Stoßdämpfer (14) auf der Grundlage der Geschwindigkeits- und Zenitpositionsdaten zu erzeugen; und
eine mit dem Prozessor (24) gekoppelte Anzeige, die so konfiguriert ist, dass sie gleichzeitig eine visuelle Darstellung der Geschwindigkeitsdaten zu den Zenitpositionsdaten auf der Grundlage des für den vorderen Stoßdämpfer (12) und den hinteren Stoßdämpfer (14) berechneten Annäherungskurven-Videosignals erzeugt, wobei die visuelle Darstellung eine Kurvenanpassungsanalyse der Geschwindigkeitsdaten gegenüber den Zenitpositionsdaten für den vorderen Stoßdämpfer (12) und den hinteren Stoßdämpfer (14) umfasst, wobei die Anzeige auf der Grundlage der Kurvenanpassungsanalyse Einstellungen für die Dämpfungskraft des vorderen Stoßdämpfers (12) und des hinteren Stoßdämpfers (14) empfiehlt.

2. System (10) nach Anspruch 1, wobei der Prozessor (24) Datenpunkte der vertikalen Komponenten der Zenitpositionsdaten für den vorderen Stoßdämpfer (12) und den hinteren Stoßdämpfer (14) für Ereignisse filtert, auf denen die Kurvenanpassungsanalyse basiert, wobei die Anzeige visuelle Darstellungen der gefilterten Datenpunkte für den vorderen Stoßdämpfer (12) und den hinteren Stoßdämpfer (14) als Kurvenanpassung einer Rückprall- und Dämpfungsgeschwindigkeit über der Zenitposition für jedes Ereignis ausgibt.

3. System (10) nach Anspruch 1, wobei die Anzeige eine Anwendung auf einem Smartphone oder einem Tablet ist.

4. System (10) nach Anspruch 1, wobei aufgezeichnete Wellenformen der vertikalen vorderen und hinteren Stoßdämpfer-Auslenkungssignale Zenitposition, Geschwindigkeit, Beschleunigung, Kraft und Arbeitsdaten für den vorderen Stoßdämpfer (12) und den hinteren Stoßdämpfer (14) erzeugen, wobei die aufgezeichneten Wellenformen in einem Zeitbereich dargestellt werden.

5. System (10) nach Anspruch 1, wobei der Prozessor (24) die Geschwindigkeits- und Zenitpositionsdaten für aufgezeichnete Ereignisse berechnet und vordere und hintere Stoßdämpferregressionslinien der Geschwindigkeitsdaten gegenüber den Zenitpositionsdaten erzeugt, wobei eine Neigung der vorderen Stoßdämpferregressionslinie mit einer Neigung der hinteren Stoßdämpferregressionslinie verglichen wird, um die empfohlenen Einstellungen des vorderen Stoßdämpfers (12) und des hinteren Stoßdämpfers (14) festzulegen, wobei die empfohlenen Einstellungen die Neigungen der vorderen und hinteren Stoßdämpfer-Regressionslinien innerhalb von 15° parallel einstellen.

6. System (10) nach Anspruch 1, wobei der Prozessor (24) die Gesamtarbeit für das Einfedern und Ausfedern des vorderen Stoßdämpfers (12) und des hinteren Stoßdämpfers (14) berechnet, wobei die Gesamtarbeit eine Funktion von Einfederungsdaten und Kraftdaten ist, wobei der Prozessor (24) vordere Stoßdämpfer-Regressionslinien und hintere Stoßdämpfer-Regressionslinien der Gesamtarbeit in Abhängigkeit von den Geschwindigkeitsdaten und den Kraftdaten in Abhängigkeit von den Geschwindigkeitsdaten erzeugt und die empfohlenen Einstellungen des vorderen Stoßdämpfers (12) und des hinteren Stoßdämpfers (14) berechnet, die eine Steigung der vorderen Stoßdämpfer-Regressionslinien und eine Steigung der hinteren Stoßdämpfer-Regressionslinien innerhalb von 15° parallel einstellen.

7. System (10) nach Anspruch 1, welches weiter einen GPS-Recorder umfasst, der die vertikalen vorderen und hinteren Stoßdämpfer-Signale für den vorderen Stoßdämpfer (12) und den hinteren Stoßdämpfer (14) zu Ereignissen korreliert, die einer verfolgten GPS-Position entsprechen.

8. System (10) nach Anspruch 1, welches weiter einen elektronischen Speicher zum Speichern der erzeugten Daten umfasst, wobei der Prozessor (24) die Zenitpositionsdaten und die Geschwindigkeitsdaten aus vertikalen vorderen und hinteren Stoßdämpfer-Auslenkungssignalen erzeugt, die von einer Vielzahl von Fahrten gesammelt werden, die im elektronischen Speicher gespeichert sind.

9. System (10) nach Anspruch 1, weiter umfassend einen Filter zum Identifizieren einer Anfangszeit und einer Endzeit einer Reihe von vertikalen vorderen und hinteren Stoßdämpfer-Auslenkungssignalen entlang einer Fahrt, wobei der Prozessor (24) die gefilterten Auslenkungssignale für Zenitpositionsdaten, Geschwindigkeitsdaten, Beschleunigungsdaten, Kraftdaten und Arbeitsdatenanalyse analysiert und die Anzeige eine visuelle Darstellung der Geschwindigkeitsdaten gegenüber den Zenitpositionsdaten und der Geschwindigkeitsdaten gegenüber den Arbeitsdaten erzeugt.

10. System (10) nach Anspruch 1, wobei der Prozessor (24) die vorderen und hinteren Stoßdämpfer-Geschwindigkeitsdaten und die Zenitpositionsdaten für zwei oder mehr Fahrten erzeugt und die Anzeige Ergebnisse von dem Prozessor (24) erhält, um die visuelle Darstellung für die zwei oder mehr Fahrten zu erzeugen.

11. System (10) nach Anspruch 1, wobei der Prozessor (24) vertikale Geschwindigkeitsdaten in Abhängigkeit von der Höhe für Fahrtereignisse erzeugt und die Anzeige ein Diagramm der vertikalen Komponente der vertikalen Geschwindigkeitsdaten in Abhängigkeit von der Höhe ausgibt.

12. System (10) nach Anspruch 1, wobei der Prozessor (24) Histogramme für Ereignisse mit einer gleichen Kompressionsgeschwindigkeit und einer gleichen Rückprallgeschwindigkeit erzeugt, und die Anzeige eine visuelle Darstellung einer Anzahl von Ereignissen mit gleichen Kompressionsgeschwindigkeiten und einer Anzahl von Ereignissen mit gleichen Rückprallgeschwindigkeiten erzeugt.

13. System (10) nach Anspruch 1, wobei die Anzeige in Echtzeit ausgegeben wird, wobei der Prozessor (24) die Geschwindigkeits- und Zenitpositionsdaten während eines Ereignisses erzeugt und die Anzeige eine visuelle Darstellung der Geschwindigkeitsdaten zu den Zenitpositionsdaten auf der Grundlage des für den vorderen Stoßdämpfer (12) und den hinteren Stoßdämpfer (14) in Echtzeit während des Ereignisses berechneten Annäherungsvideosignals erzeugt.

14. System (10) nach Anspruch 1, weiter umfassend ein Aufzeichnungsmodul, das Daten mit einer festen Frequenz aufzeichnet und mit der Anzeige koppelt, um Wellenformen der vertikalen Komponente der Verschiebung, der Geschwindigkeit und der Beschleunigung des vorderen Stoßes (12) und des hinteren Stoßes (14) in einem Zeitbereich zu erzeugen.

15. System (10) nach Anspruch 1, welches weiter einen Filter umfasst, der Ereignisse gemäß benutzerdefinierten Eingaben filtert, wobei die Geschwindigkeits- und Zenitpositionsdaten für den vorderen Stoßdämpfer (12) und den hinteren Stoßdämpfer (14) nur die gemäß den benutzerdefinierten Eingaben gefilterten Ereignisse enthalten, wobei die Anzeige eine visuelle Darstellung der Geschwindigkeitsdaten zu den Zenitpositionsdaten basierend auf den gefilterten Ereignissen erzeugt.

## Revendications

1. Système (10) de réglage d'une force d'amortissement sur une suspension d'une bicyclette, le système (10) comprenant :
un capteur d'amortisseur avant (18) couplé à un amortisseur avant (12) de la bicyclette pour générer un signal de déviation verticale de l'amortisseur avant représentatif d'une déviation verticale de l'amortisseur avant (12) ;
un capteur d'amortisseur arrière (22) couplé à un amortisseur arrière (14) de la bicyclette pour générer un signal de déviation verticale de l'amortisseur arrière représentatif d'une déviation verticale de l'amortisseur arrière (14) ;
un processeur (24) couplé aux capteurs (18/22), pour
générer des données sur la vitesse de l'amortisseur avant représentatives d'une composante verticale de la vitesse de l'amortisseur avant vitesse de l'amortisseur avant (12) sur la base des signaux de déviation verticale des amortisseurs avant et arrière,
générer des données sur la vitesse de l'amortisseur arrière représentatives d'une composante verticale de la vitesse de l'amortisseur arrière vitesse de l'amortisseur arrière (14) sur la base des signaux verticaux de déviation de l'amortisseur avant et de l'amortisseur arrière,
générer des données de position zénithale pour l'amortisseur avant (12) représentatives d'un déplacement vertical sur la base du signal de déviation verticale de l'amortisseur avant, et générer un signal vidéo de courbe d'approximation pour l'amortisseur avant (12) sur la base des données de vitesse et de position zénithale, et
générer des données de position zénithale pour l'amortisseur arrière (14) représentatives d'un déplacement vertical basé sur le signal de déviation verticale de l'amortisseur arrière, et générer un signal vidéo de courbe d'approximation pour
l'amortisseur arrière (14) basé sur les données de vitesse et de position zénithale; et
un affichage couplé au processeur (24) configuré pour générer simultanément une représentation visuelle des données de vitesse par rapport aux données de position zénithale sur la base du signal vidéo de courbe d'approximation calculé pour l'amortisseur avant (12) et l'amortisseur arrière (14), la représentation visuelle comprenant une analyse d'ajustement de courbe des données de vitesse par rapport aux données de position zénithale pour l'amortisseur avant (12) et l'amortisseur arrière (14), dans laquelle l'affichage recommande des ajustements à la force d'amortissement de l'amortisseur avant (12) et de l'amortisseur arrière (14) sur la base de l'analyse d'ajustement de courbe.

2. Système (10) de la revendication 1, dans lequel le processeur (24) filtre les points de données des composantes verticales des données de position zénithale pour l'amortisseur avant (12) et l'amortisseur arrière (14) pour les événements sur lesquels l'analyse d'ajustement de courbe est basée, dans lequel l'affichage produit des représentations visuelles des points de données filtrés pour l'amortisseur avant (12) et l'amortisseur arrière (14) comme un ajustement de courbe d'un rebond et d'une vitesse d'amortissement en fonction de la position zénithale pour chaque événement.

3. Système (10) de la revendication 1, dans lequel l'affichage est une application sur un smartphone ou une tablette.

4. Système (10) de la revendication 1, dans lequel les formes d'onde enregistrées des signaux verticaux de déviation des chocs avant et arrière génèrent des données de position zénithale, de vitesse, d'accélération, de force et de travail pour le choc avant (12) et le choc arrière (14), les formes d'onde enregistrées étant présentées dans un domaine temporel.

5. Système (10) de la revendication 1, dans lequel le processeur (24) calcule les données de vitesse et de position zénithale pour les événements enregistrés et génère des lignes de régression des chocs avant et arrière des données de vitesse par rapport aux données de position zénithale, dans lesquelles une pente de la ligne de régression du choc avant est comparée à une pente de la ligne de régression du choc arrière pour établir les ajustements recommandés du choc avant (12) et du choc arrière (14), les ajustements recommandés réglant les pentes des lignes de régression des chocs avant et arrière à moins de 15 ° de parallélisme.

6. Système (10) de la revendication 1, dans lequel le processeur (24) calcule le travail total pour la déflexion et le rebond de l'amortisseur avant (12) et de l'amortisseur arrière (14), le travail total étant une fonction des données de déflexion et des données de force, dans lequel le processeur (24) génère des lignes de régression de l'amortisseur avant et des lignes de régression de l'amortisseur arrière du travail total en fonction des données de vitesse et des données de force en fonction des données de vitesse et calcule les réglages recommandés de l'amortisseur avant (12) et de l'amortisseur arrière (14) qui fixent une pente des lignes de régression de l'amortisseur avant et une pente des lignes de régression de l'amortisseur arrière à moins de 15 ° de parallélisme.

7. Système (10) de la revendication 1, comprenant en outre un enregistreur GPS qui corrèle les signaux verticaux de déviation des amortisseurs avant et arrière pour l'amortisseur avant (12) et l'amortisseur arrière (14) en événements correspondant à une position GPS suivie.

8. Système (10) de la revendication 1, comprenant en outre un stockage électronique pour stocker les données générées, dans lequel le processeur (24) génère les données de position zénithale et les données de vitesse à partir des signaux verticaux de déflexion des chocs avant et arrière collectés à partir d'une pluralité de parcours stockés dans le stockage électronique.

9. Système (10) de la revendication 1, comprenant en outre un filtre pour identifier une heure de début et une heure de fin d'une série de signaux de déviation d'amortisseurs verticaux avant et arrière le long d'un parcours, le processeur (24) analysant les signaux de déviation filtrés pour les données de position zénithale, les données de vitesse, les données d'accélération, les données de force et l'analyse des données de travail, et l'affichage générant une représentation visuelle des données de vitesse par rapport aux données de position zénithale et des données de vitesse par rapport aux données de travail.

10. Système (10) de la revendication 1, dans lequel le processeur (24) génère les données de vitesse des chocs avant et arrière et les données de position au zénith pour deux parcours ou plus, et l'écran obtient des résultats du processeur (24) pour générer la représentation visuelle pour les deux parcours ou plus.

11. Système (10) de la revendication 1, dans lequel le processeur (24) génère des données de vitesse verticale en fonction de l'élévation pour les événements de la course, et l'affichage produit un graphique de la composante verticale des données de vitesse verticale en fonction de l'élévation.

12. Système (10) de la revendication 1, dans lequel le processeur (24) génère des histogrammes pour les événements ayant une vitesse de compression égale et une vitesse de rebond égale, et l'écran génère une représentation visuelle d'un nombre d'événements ayant des vitesses de compression égales et un nombre d'événements ayant des vitesses de rebond égales.

13. Système (10) de la revendication 1, dans lequel l'affichage est produit en temps réel, le processeur (24) générant les données de vitesse et de position zénithale pendant un événement et l'affichage générant une représentation visuelle des données de vitesse aux données de position zénithale sur la base du signal vidéo d'approximation calculé pour l'amortisseur avant (12) et l'amortisseur arrière (14) en temps réel pendant l'événement.

14. Système (10) de la revendication 1 comprend en outre un module d'enregistrement qui enregistre des données à une fréquence fixe et se couple à l'écran pour générer des formes d'onde de la composante verticale du déplacement, de la vitesse et de l'accélération du choc avant (12) et du choc arrière (14) dans un domaine temporel.

15. Système (10) de la revendication 1, comprenant en outre un filtre qui filtre les événements en fonction des entrées définies par l'utilisateur, les données de vitesse et de position zénithale pour l'amortisseur avant (12) et l'amortisseur arrière (14) ne comprenant que les événements filtrés en fonction des entrées définies par l'utilisateur, l'affichage générant une représentation visuelle des données de vitesse aux données de position zénithale en fonction des événements filtrés.
